# EUROPEAN PATENT APPLICATION

(11) **EP 3 541 033 A1**
(43) Date of publication of application: **18.09.2019**
(21) Application number: 17870362.5
(22) Date of filing: 09.11.2017
(51) Int. Cl.: H04L 27/26, H04W 28/06, H04W 72/04

(54) **WIRELESS COMMUNICATION SYSTEM AND REFERENCE SIGNAL TRANSMISSION METHOD**

(30) Priority: 11.11.2016 JP 2016221062
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuki, Tokyo 100-6150 (JP); TAKEDA, Kazuaki, Tokyo 100-6150 (JP); NAGATA, Satoshi, Tokyo 100-6150 (JP); GUO, Shaozhen, Beijing 100190 (CN)
(74) Representative: Hoffmann Eitle
(86) International application number: PCT/JP2017/040457
(87) International publication number: WO 2018/088486

(57) **Abstract**

A radio communication system that forms a plurality of cells including a first cell and a second cell adjacent to the first cell, including: a first communication apparatus in the first cell; and a second communication apparatus in the second cell, wherein the first communication apparatus includes a first transmitting unit that transmits a reference signal and the second communication apparatus includes a second transmitting unit that transmits a reference signal, and the reference signal transmitted by the first transmitting unit and the reference signal transmitted by the second transmitting unit are orthogonalized in the same radio resource.

## Description

### TECHNICAL FIELD

The present invention relates to a radio communication system including a user equipment and a base station.

### BACKGROUND ART

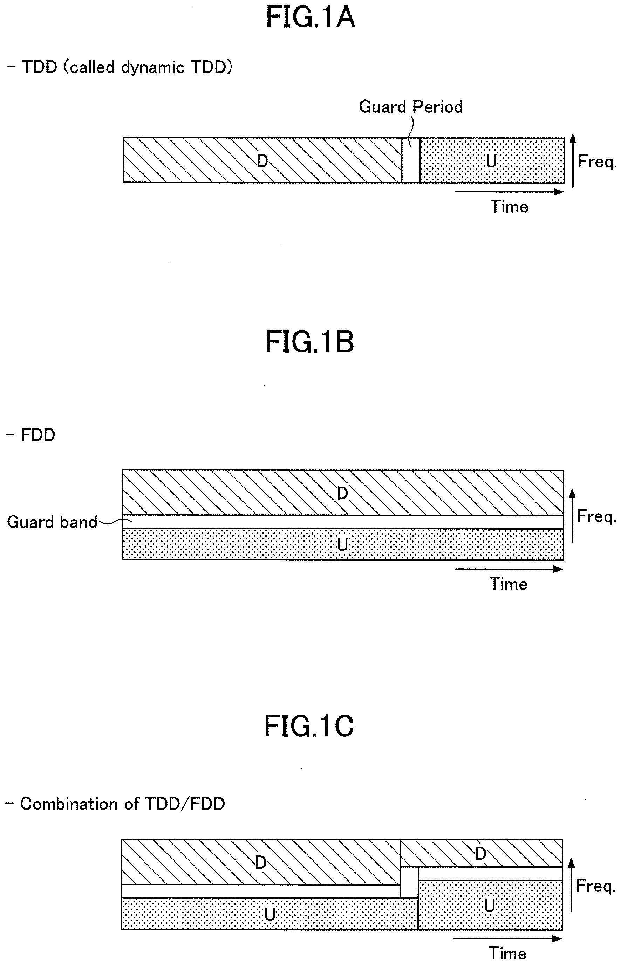

In the Third Generation Partnership Project (3GPP), a next-generation communication standard (5G or NR) of a Long Term Evolution (LTE) system and an LTE-Advanced system has been discussed. In an NR system, flexible duplex that flexibly controls resources used for downlink communication and uplink communication according to generated downlink traffic and uplink traffic has been examined. Examples of the flexible duplex include a time division duplex (TDD) system (hereinafter, referred to as dynamic TDD) that dynamically changes uplink resources and downlink resources in a time domain as illustrated in Fig. 1A, an FDD system that dynamically changes uplink resources and downlink resources in a frequency domain as illustrated in Fig. 1B, and a combination of the TDD system and the FDD system as illustrated in Fig. 1C. In addition, full duplex that performs uplink communication and downlink communication with the same resource at the same time has been examined.

Hereinafter, dynamic TDD will be described as an example for simplicity of explanation. The other systems have the same basic structure as dynamic TDD.

Typically, it is assumed that the bias between downlink traffic and uplink traffic in a small cell is more than that in a large cell. Therefore, it is possible to effectively accommodate traffic by independently controlling downlink communication and uplink communication in each cell, using dynamic TDD.

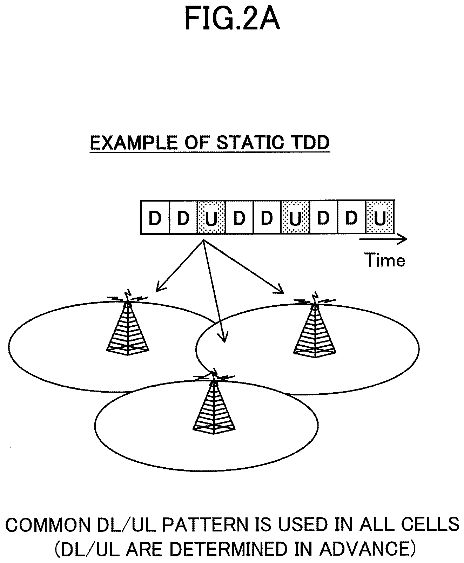

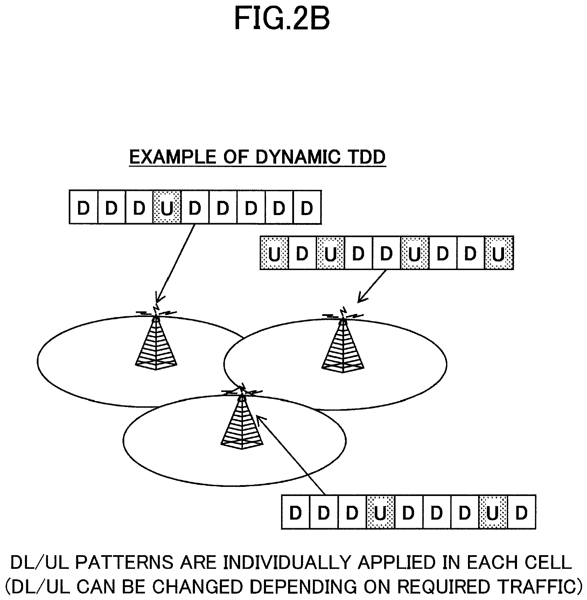

In dynamic TDD, downlink and uplink communication directions are dynamically changed in a time interval, such as a subframe, a slot, or a mini-slot. That is, as illustrated in Fig. 2A, in static TDD that is applied in LTE, a downlink/uplink pattern which is common to cells and is configured in advance is used. In dynamic TDD, as illustrated in Fig. 2B, individual downlink/uplink patterns are used in each cell. Therefore, each cell can dynamically change the downlink and uplink communication directions, depending on the amount of downlink traffic and the amount of uplink traffic.

### CITATION LIST

### NON-PATENT DOCUMENT

Non-Patent Document 1: 3GPP TS 36.211 V14.0.0
Non-Patent Document 2: 3GPP TR 36.829 V11.1.0
Non-Patent Document 3: 3GPP TR 36.866 V12.0.1
Non-Patent Document 4: 3GPP TR 36.884 V13.1.0

### SUMMARY OF THE INVENTION

### PROBLEM TO BE SOLVED BY THE INVENTION

It is assumed that, in the NR system, a demodulation reference signal (DMRS) is used, as in the LTE system.

However, as described above, when the system that flexibly controls the resources used for downlink communication and uplink communication in each cell is used, for example, downlink communication in a cell (referred to as an interfering cell) interferes with uplink communication in another cell (referred to as a target cell) and the possibility that a base station in the target cell will not appropriately receive an uplink signal from a user equipment increases.

In particular, the demodulation reference signal is used to estimate the channel of a desired signal and is also used in an interference prevention process. Therefore, when a communication apparatus (a user equipment or a base station) is not capable of appropriately receiving the demodulation reference signal in the target cell, neither the interference prevention process nor the desired signal receiving process can be appropriately performed.

Therefore, when the system that flexibly controls the resources used for downlink communication and uplink communication in each cell is used, the communication apparatus in the target cell needs to have a structure that can appropriately receive the demodulation reference signal of the target cell. This problem is not limited to the demodulation reference signal and can occur in all types of reference signals.

The invention has been made in view of the above-mentioned problems and an object of the invention is to provide a technique that enables a communication apparatus in a target cell to appropriately receive a reference signal of the target cell in a radio communication system supporting a system which flexibly controls resources used for downlink communication and uplink communication in each cell.

### MEANS FOR SOLVING PROBLEM

According to the disclosed technique, there is provided a radio communication system that forms a plurality of cells including a first cell and a second cell adjacent to the first cell. The radio communication system includes a first communication apparatus in the first cell and a second communication apparatus in the second cell. The first communication apparatus includes a first transmitting unit that transmits a reference signal and the second communication apparatus includes a second transmitting unit that transmits a reference signal. The reference signal transmitted by the first transmitting unit and the reference signal transmitted by the second transmitting unit are orthogonalized in the same radio resource.

### EFFECT OF THE INVENTION

The disclosed technique, there is provided a technique that enables a communication apparatus in a target cell to appropriately receive a reference signal of the target cell in a radio communication system supporting a system which flexibly controls resources used for downlink communication and uplink communication in each cell.

### BRIEF DESCRIPTION OF DRAWINGS

Fig. 1A is a diagram illustrating flexible duplex, and illustrates TDD.
Fig. 1B is a diagram illustrating flexible duplex, and illustrates FDD.
Fig. 1C is a diagram illustrating flexible duplex, and illustrates a combination of TDD and FDD.
Fig. 2A is a diagram illustrating static TDD.
Fig. 2B is a diagram illustrating dynamic TDD.
Fig. 3 is a diagram illustrating a radio communication system according to an embodiment of the invention.
Fig. 4 is a diagram illustrating an example of DL/UL patterns in dynamic TDD. (a) illustrates pattern 1, (b) illustrates pattern 2, and (c) illustrates pattern 3.
Fig. 5 is a diagram illustrating an example of the structure of a frame in dynamic TDD.
Fig. 6A is a diagram illustrating examples of DMRSs in LTE, and illustrates DL.
Fig. 6B is a diagram illustrating examples of DMRSs in LTE, and illustrates UL.
Fig. 7 is a diagram illustrating an interference pattern of UL in a target cell.
Fig. 8 is a diagram illustrating an interference pattern of DL in the target cell.
Fig. 9 is a diagram illustrating arrangement examples of DMRSs.
Fig. 10 is a diagram illustrating arrangement examples 1-1 (a) and 1-2 (b) of the DMRSs.
Fig. 11 is a diagram illustrating arrangement example 2-1 of the DMRSs.
Fig. 12 is a diagram illustrating arrangement example 2-2 of the DMRSs.
Fig. 13 is a diagram illustrating arrangement example 2-3 of the DMRSs.
Fig. 14 is a diagram illustrating arrangement example 3-1 of the DMRSs.
Fig. 15 is a diagram illustrating arrangement example 3-2 of the DMRSs.
Fig. 16 is a diagram illustrating arrangement example 3-3 of the DMRSs.
Fig. 17 is a diagram illustrating arrangement examples 4-1 (a) and 4-2 (b) of the DMRSs.
Fig. 18A is a diagram illustrating examples of a reference signal in NR, and illustrates example 1.
Fig. 18B is a diagram illustrating examples of a reference signal in NR, and illustrates example 2.
Fig. 18C is a diagram illustrating examples of a reference signal in NR, and illustrates example 3.
Fig. 19 is a diagram illustrating an example of a signaling sequence.
Fig. 20 is a diagram illustrating an example of the functional structure of a user equipment 100.
Fig. 21 is a diagram illustrating an example of the functional structure of a base station 200.
Fig. 22 is a diagram illustrating an example of the hardware configuration of the user equipment 100 and the base station 200.

### MODE(S) FOR CARRYING OUT THE INVENTION

Hereinafter, an embodiment of the invention will be described with reference to the drawings. The following embodiment is just an example and the embodiment to which the invention is applied is not limited to the following embodiment.

It is assumed that a radio communication system according to this embodiment supports at least an LTE communication system. Therefore, the existing technique defined in LTE can be appropriately used to operate the radio communication system. However, the existing technique is not limited to LTE. It is assumed that the term "LTE" used in the specification includes LTE-Advanced and systems beyond LTE-Advanced in a broad sense. The invention can also be applied to communication systems other than LTE.

In this embodiment, for example, the terms "DMRS", "CSI-RS", "SRS", "radio frame", "subframe", "slot", "RRC", "PDCCH", and "UE" which have been used in the existing LTE system are used for convenience of description and the same signals and functions as these may have different names.

In this embodiment which will be described below, a demodulation reference signal (hereinafter, referred to as a DMRS) is given as an example of a reference signal, which is just an example. The invention can also be applied to reference signals other than the DMRS. For example, the invention can be applied to a channel state information-reference signal (CSI-RS) for measuring the quality of a downlink channel, a sounding reference signal (SRS) for measuring the quality of an uplink channel, and a reference signal for transmission beam control.

In this embodiment which will be described below, a case in which the radio communication system supports flexible duplex is given as an example. However, the invention can be applied even when the radio communication system does not support the flexible duplex.

In this embodiment which will be described below, uplink (hereinafter, referred to as UL) communication and downlink (hereinafter, referred to as DL) communication are given as an example. However, the invention can also be applied to sidelink (hereinafter, referred to as SL) communication. That is, in the invention, a communication apparatus can appropriately receive a reference signal in a target cell between UL and DL, between UL and UL, between DL and DL, between SL and UL, between SL and DL, and between SL and SL.

### (Structure of Radio Communication System)

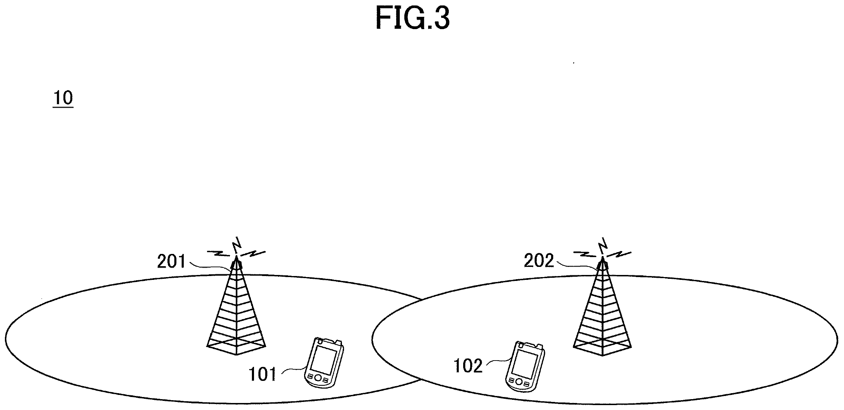

Fig. 3 is a diagram illustrating the structure of a radio communication system 10 according to this embodiment. As illustrated in Fig. 3, the radio communication system 10 according this embodiment includes user equipments 101 and 102 (hereinafter, can be generically referred to as user equipments 100) and base stations 201 and 202 (hereinafter, can be generically referred to as base stations 200). In the following embodiment, as described above, the radio communication system 10 supports flexible duplex that flexibly controls resources used for UL communication and DL communication. However, in this embodiment, dynamic TDD is mainly described as an example of the flexible duplex. In addition, the user equipment may be referred to as UE and the base station may be referred to as BS.

The user equipment 100 is any appropriate communication apparatus with a radio communication function, such as a smart phone, a mobile phone, a tablet computer, a wearable terminal, or a machine-to-machine (M2M) communication module, is connected to the base station 200 by radio, and uses various communication services provided by the radio communication system 10.

The base station 200 is a communication apparatus that provides one or more cells and communicates with the user equipment 100 by radio. In the example illustrated in Fig. 3, two base stations 201 and 202 are illustrated. However, in general, a large number of base stations 200 are provided so as to cover the service area of the radio communication system 10.

In the radio communication system 10 according to this embodiment, it is assumed that cells are synchronized with each other. Therefore, it is assumed that the boundaries of time frames (for example, radio frames, subframes, slots, or mini-slots) coincide with each other between the cells.

For example, when a temporal position T from the head of a specific subframe A is designated in a certain cell and the temporal position T from the head of the subframe A is designated in another cell, the absolute times of the temporal positions coincide with each other (or there is an error in the range in which the absolute times are considered to coincide with each other).

However, the invention is not limited to a case in which cells are synchronized with each other and can also be applied to a case in which cells are not synchronized with each other.

### (For Structure of Dynamic TDD)

As described above, in this embodiment, dynamic TDD is used as an example. Therefore, an example of the structure of the dynamic TDD according to this embodiment will be described.

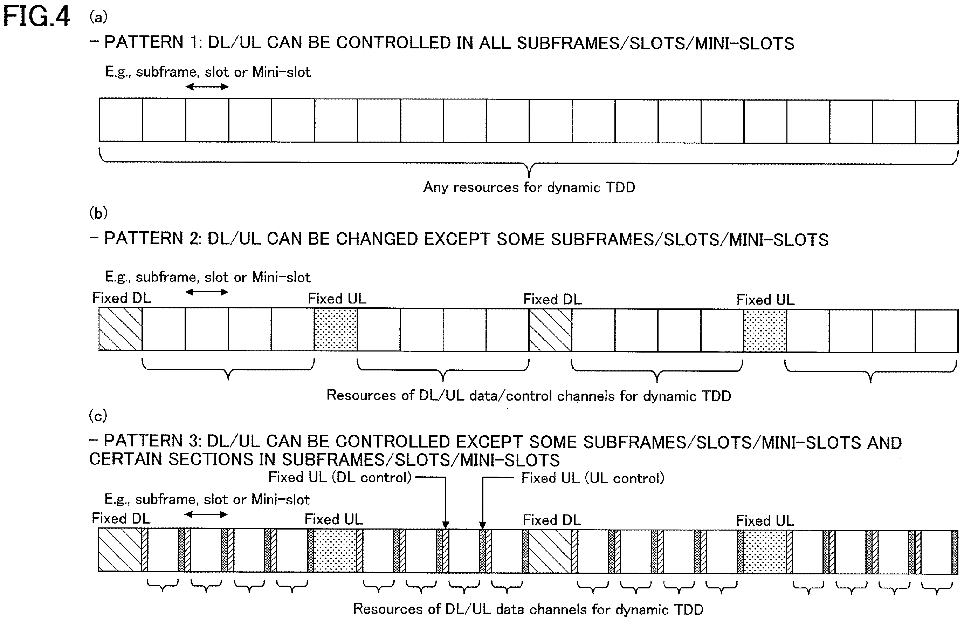

In the dynamic TDD according to this embodiment, for example, as illustrated in Fig. 4, UL communication and DL communication are performed by some UL/DL patterns. However, the invention is not limited thereto.

In pattern 1 illustrated in Fig. 4(a), UL communication/DL communication can be performed in each time slot. Here, the "time slot" is the duration of one rectangular frame (a width represented by "E.g., Subframe, Slot, or Mini-slot") in Fig. 4(a) (which holds for Figs. 4(b) and 4(c)).

In pattern 2, UL communication/DL communication are fixedly configured in some time slots and only the configured communication direction is allowed in the time slots. In contrast, in the other time slots, UL communication/DL communication can be switched and performed. In pattern 3, UL communication/DL communication are fixed configured in some time slots and in sections of the time slots (in the example illustrated in Fig. 4(c), downlink communication and uplink communication are fixedly configured in sections at both ends of the time slot) and only the configured communication direction is allowed in the time slots. In contrast, in the other time slots, UL communication/DL communication can be performed.

The technique according to the invention can be applied to any of the patterns illustrated in Fig. 4. However, in this embodiment, for example, an aspect in which the technique is applied to pattern 3 will be described.

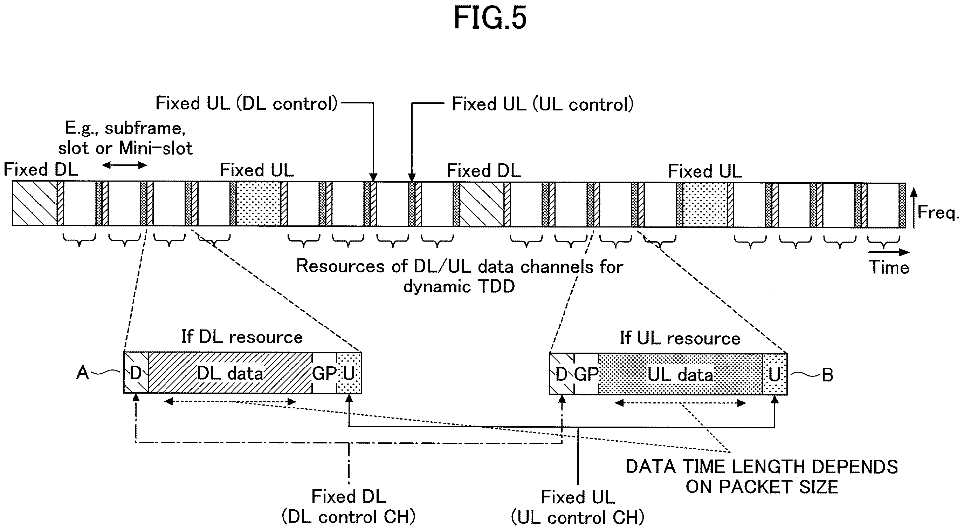

Fig. 5 is a diagram illustrating in detail the structure of a frame according to pattern 3 illustrated in Fig. 4(c). Hereinafter, for convenience of explanation, the "time slot" is referred to as a "unit time frame". As illustrated in Fig. 5, the "unit time frame" may be a subframe, may be a slot, or may be a time frame other than the subframe and the slot. The "unit time frame" may be referred to as a transmission time interval (TTI). In addition, the time length of the unit time frame may be a fixed time length that does not change over time or a time length that varies depending on, for example, a packet size. When a plurality of continuous unit time frames are used for data communication, the plurality of continuous unit time frames may be regarded as one "unit time frame" according to, for example, a packet size.

As illustrated in Fig. 5, in this example, one unit time frame includes a head time section (hereinafter, referred to as a DL control CH section) for a downlink control channel, a time section (hereinafter, referred to as a data section) for data communication, and a tail time section (hereinafter, referred to as a UL control CH section) for an uplink control channel. In addition, a guard period (GP) for switching is provided at the boundary between DL and UL.

For example, a data section in a certain unit time frame is semi-statically determined according to whether communication is DL communication or UL communication. In this case, for example, a UL or DL pattern in a set of the unit time frames (for example, an LTE radio frame which is a set of subframes) is notified from the base station 200 to the user equipment 100 by higher layer signaling (for example, RRC signaling) (for example, the pattern disclosed in Non-Patent Document 1).

For example, a data section in a certain unit time frame may dynamically determined according to whether communication is DL communication or UL communication. In this case, for example, in the DL control CH sections of the unit time frames represented by A and B in Fig. 5, the user equipment 100 receives downlink control information including the designation of DL or UL from the base station 200, using DL control CH. The user equipment 100 transmits UL data or receives DL data according to the designation.

When the data section of the unit time frame is DL as represented by A, the user equipment 100 transmits, for example, ACK/NACK for DL data in the UL control CH section of the unit time frame. When the data section of the unit time frame is UL as represented by B, the user equipment 100 transmits, for example, ACK/NACK for UL data which has been received before the unit time frame in the UL control CH section of the unit time frame.

In some cases, one or both of the DL control CH section and the UL control CH section are not present in the unit time frame. For example, in a case in which the amount of data (packet size) transmitted or received is large, when three continuous unit time frames are used to transmit or receive data, a DL control CH section is present at the head of a first unit time frame, a data section follows the DL control CH section in the first unit time frame, a second unit time frame includes only a data section, and a third unit time frame includes a data section and a UL control CH section provided at the end.

### (For DMRS)

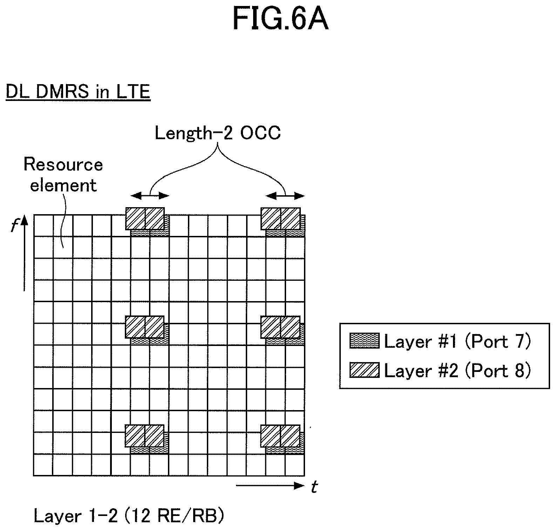

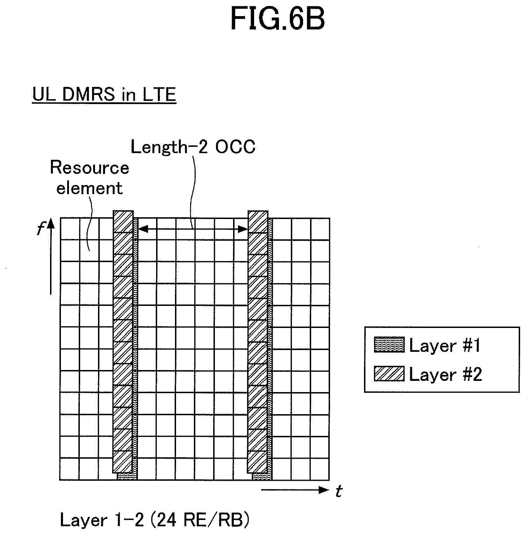

In this embodiment, a target DMRS may be the same as a DMRS used in LTE or may be different from the DMRS used in LTE. For example, Figs. 6A and 6B illustrate examples of the DMRS used in LTE (Non-Patent Document 1). Fig. 6A illustrates DL DMRSs (layers 1 and 2) and Fig. 6B illustrates UL DMRSs (layers 1 and 2).

As illustrated in Fig. 6A, in DL (CP-OFDM) communication of LTE, distributed arrangement is used. In contrast, in UL communication of LTE, the arrangement of DMRSs which are continuous in a frequency direction is used so as to be suitable for a signal waveform based on DFT-S-OFDM in single carrier transmission.

The details of NR are not determined and it is assumed that the same DMRS as that in LTE is used in NR. However, in NR, CP-OFDM can be used in both UL communication and DL communication, unlike LTE. Therefore, in NR, the distributed arrangement illustrated in Fig. 6A can be applied to both UL communication and DL communication. However, in NR, DFT-S-OFDM can be accessorily used for UL communication. It is considered that continuous arrangement in the frequency direction illustrated in Fig. 6B is used for UL communication.

### (For Interference Pattern)

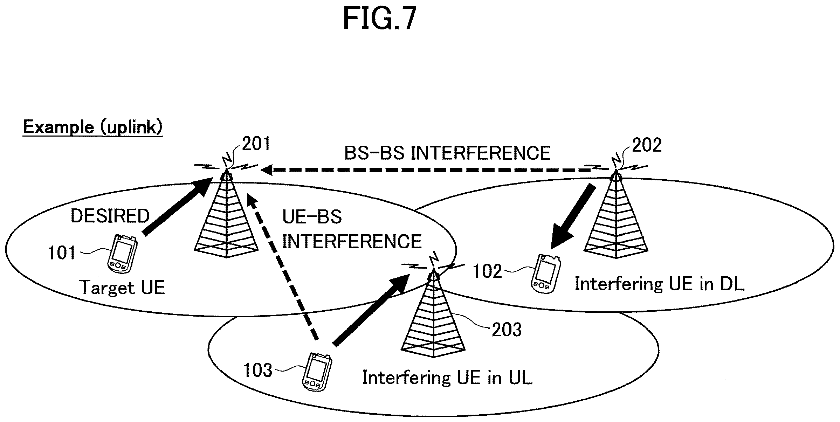

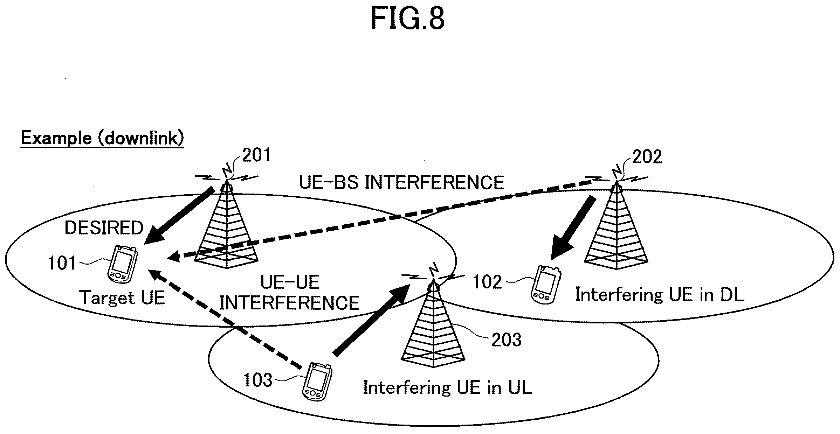

In this embodiment, in a target cell (which may also be referred to as a serving cell), a communication apparatus (in this embodiment, the user equipment 100 or the base station 200) can receive a DMRS of the target cell (a DMRS transmitted from the base station 200 or a DMRS transmitted from the user equipment 100 in this embodiment), without being affected by other cells (interfering cells). Before a structure that can achieve the above is described, first, an interference pattern will be described with reference to Figs. 7 and 8. Figs. 7 and 8 illustrate a base station 203 and a user equipment 103, in addition to the base stations 201 and 202 and the user equipments 101 and 102. In Figs. 7 and 8, it is assumed that a cell of the base station 201 is a target cell and both a cell of the base station 202 and a cell of the base station 203 are interfering cells.

Fig. 7 illustrates interference in target communication when UL communication (that is, signal transmission from the user equipment 100 to the base station 20) in a target cell is the target communication. As illustrated in Fig. 7, a DL signal from a base station (the base station 202 in Fig. 7) in an adjacent cell and a UL signal from a user equipment (the user equipment 103 in Fig. 7) in an adjacent cell become interferences.

Fig. 8 illustrates interference in target communication when DL communication (that is, the reception of signals from the base station 200 by the user equipment 100) in a target cell is the target communication. As illustrated in Fig. 8, a DL signal from a base station (the base station 202 in Fig. 8) in an adjacent cell and a UL signal from a user equipment (the user equipment 103 in Fig. 8) in an adjacent cell become interferences.

As described above, there are various interference patterns. In a recent situation in which the density of cells increases with the spread of, for example, smart phones, particularly, the interference of a DL signal transmitted from a base station in an adjacent cell against desired UL communication increases.

A receiving beam forming (a receiving beam is directed to an arrival direction of an interference signal, that is, a null is formed in the arrival direction) is effective in reducing the interference. Specifically, for example, the base station 201 (including a plurality of antennas) illustrated in Fig. 7 is provided with an MMSE-IRC receiver disclosed in Non-Patent Documents 2 to 4 to reduce interference from an adjacent cell. The MMSE-IRC receiver estimates the statistical properties of the interference between adjacent cells as well as the channel information of a desired signal, using a UL DMRS, adjusts the phase of each received signal such that the null of antenna gain is created in the arrival direction of the interference between adjacent cells on the basis of the information, and combines the signals.

However, in a situation in which UL/DL are dynamically changed between the cells as in dynamic TDD, for example, the base station 201 is not capable of appropriately receiving a desired DMRS due to interference with a downlink data signal from an adjacent cell and is not capable of performing the above-mentioned interference prevention process. In addition, the base station 201 is not capable of appropriately estimating the channel of a desired signal. As a result, the throughput of a desired data signal is likely to deteriorate.

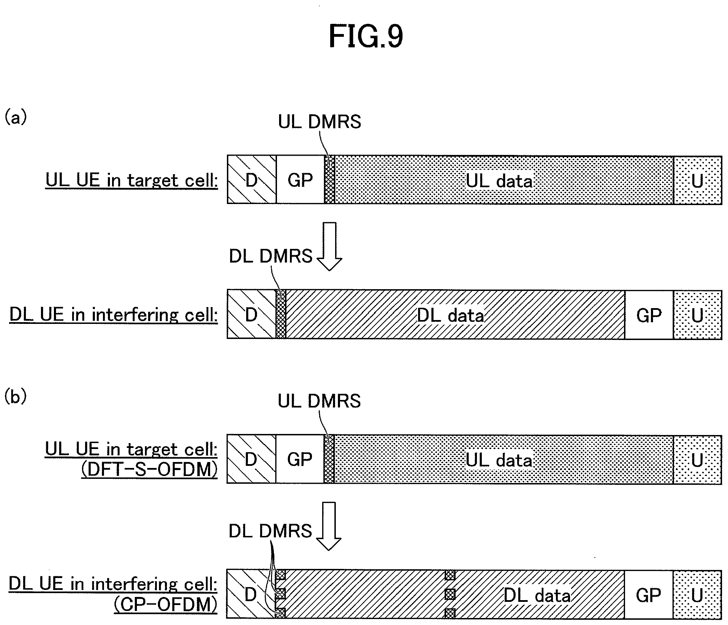

Fig. 9 illustrates an example of the arrangement of a DMRS in UL (hereinafter, referred to as a UL UMRS) in a target cell and the arrangement of a DMRS in DL (hereinafter, referred to as a DL UMRS) in an adjacent cell (interfering cell).

Figs. 9(a) and 9(b) illustrate unit time frames at the same time. Fig. 9(a) illustrates an image when signal waveforms are the same in the target cell and the interfering cell and Fig. 9(b) illustrates an image when signal waveforms are different in the target cell and the interfering cell (here, DFT-S-OFDM is used in UL and CP-OFDM is used in DL).

In Figs. 9(a) and 9(b), the temporal positions of the UL DMRS and the DL DMRS are different from each other. In the example illustrated in Figs. 9(a) and 9(b), DL data interferes with the UL DMRS. When the target cell is regarded as the interfering cell and the interfering cell is regarded as the target cell, UL data and a UL control signal can interfere with the DL DMRS.

As will be described in detail below, in this embodiment, in order to remove (or reduce) interference to the DMRS, the positions of the time-frequency resources (which can also be referred to as radio resources) of the DMRSs are aligned with each other between the cells. In addition, DMRSs in each cell are determined such that the DMRSs in the cells are orthogonalized. The orthogonalization is performed in order to prevent the interference between a plurality of signal sequences when the signal sequences are multiplexed and transmitted.

However, in the radio communication system 10 according to this embodiment, in some cases, the deviation between the temporal positions of the DMRSs in the cells is allowed as illustrated in Fig. 9. For example, when it is considered that the cells are separated from each other and the influence of interference is small, the temporal positions of the DMRSs between the cells may deviate from each other.

Next, examples 1 to 4 of the arrangement of the DMRSs when the time-frequency resources of the DMRSs in the cells are aligned with each other will be described.

In each of the following arrangement examples, a combination of a UL DMRS (for example, the DMRS transmitted by the user equipment 101 illustrated in Fig. 3) in the target cell and a DL DMRS (for example, the DMRS transmitted by the base station 202 illustrated in Fig. 3) in the interfering cell will be described. This is an example of a case in which the influence of interference is assumed to be large.

The arrangement of the DMRSs between the cells according to this embodiment can be applied to combinations including all of the patterns and SLs illustrated in Figs. 7 and 8. That is, the arrangement of the DMRSs can be applied between UL and DL (between the DMRS transmitted by the user equipment and the DMRS transmitted by a base station in an adjacent cell), between UL and UL (between the DMRS transmitted by the user equipment and the DMRS transmitted by a user equipment in an adjacent cell), between DL and DL (between the DMRS transmitted by the base station and the DMRS transmitted by a base station in an adjacent cell), between SL and UL (between the DMRS transmitted by the user equipment performing SL communication and the DMRS transmitted by a user equipment in an adjacent cell), between SL and DL (between the DMRS transmitted by the user equipment performing SL communication and the DMRS transmitted by a base station in an adjacent cell), and between SL and SL (between the DMRS transmitted by the user equipment performing SL communication and the DMRS transmitted by a user equipment performing SL communication in an adjacent cell). In addition, the invention can be applied to combinations other than the above-mentioned combinations.

In each of the drawings illustrating the following arrangement examples, a UL unit time frame in the target cell and a DL unit time frame in the interfering cell are illustrated. The unit time frames are located at the same temporal position. In addition, one UL unit time frame in the target cell and one DL unit time frame in the interfering cell are illustrated. However, basically the arrangement of DMRSs is the same in the unit time frames at other temporal positions. The DMRS may be transmitted from the communication apparatus only when data is transmitted and received or may be transmitted from the communication apparatus when no data is transmitted and received, unless otherwise stated.

### (Arrangement Example 1 of DMRS)

Arrangement example 1 of the DMRS is divided into arrangement examples 1-1 and 1-2. Next, each arrangement example will be described.

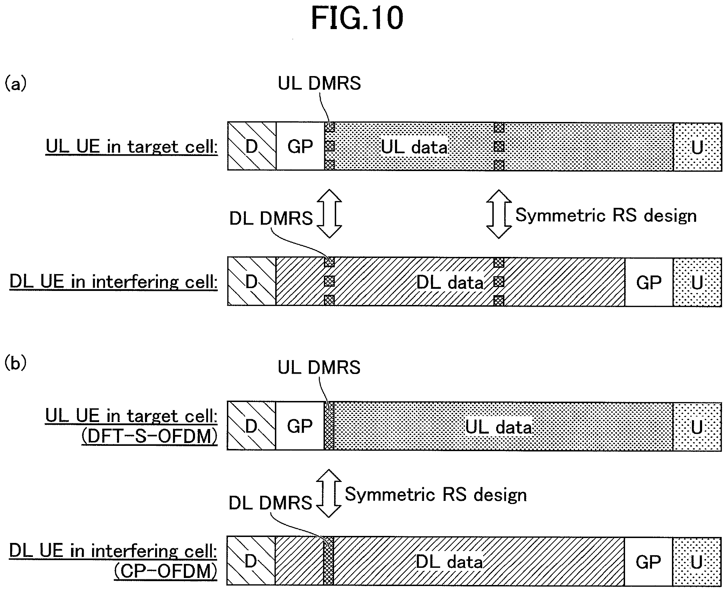

Fig. 10(a) illustrates arrangement example 1-1 of the DMRS. As illustrated in Fig. 10(a), in arrangement example 1-1, a UL DMRS in the target cell and a DL DMRS in the interfering cell are transmitted by the same time-frequency resource in the unit time frame. However, the time-frequency resources may not be completely identical to each other between the DMRSs. In this case, the reason is that, even when the time-frequency resources are not completely identical to each other, the effect of reducing interference is obtained when the DMRSs are orthogonalized in an overlap portion. Hereinafter, it is assumed that the term "same time-frequency resource" includes a case in which the time-frequency resources are completely identical to each other and a case in which the time-frequency resources are not completely identical to each other (partially overlap each other).

Fig. 10(a) illustrates a case in which the signal waveform of the UL DMRS in the target cell is identical to the signal waveform of the DL DMRS in the interfering cell (for example, CP-OFDM).

Fig. 10(b) illustrates arrangement example 1-2 of the DMRS. In arrangement example 1-2, similarly to arrangement example 1-1, a UL DMRS in the target cell and a DL DMRS in the interfering cell are transmitted by the same time-frequency resource in the unit time frame. In the example illustrated in Fig. 10(b), the signal waveform (DFT-S-OFDM) of the UL DMRS in the target cell is different from the signal waveform (CP-OFDM) of the DL DMRS in the interfering cell. However, the sequence and resource mapping of the UL DMRS in the target cell and the sequence and resource mapping of the DL DMRS in the interfering cell are determined (may be configured) such that the UL DMRS and the DL DMRS are orthogonalized, and the DMRSs in each cell are transmitted on the basis of, for example, the determination such that the DMRSs in a plurality of cells are orthogonalized in the radio resources.

### (Arrangement Example 2 of DMRS)

Arrangement example 2 of the DMRS is divided into arrangement examples 2-1, 2-2, and 2-3. Next, each arrangement example will be described.

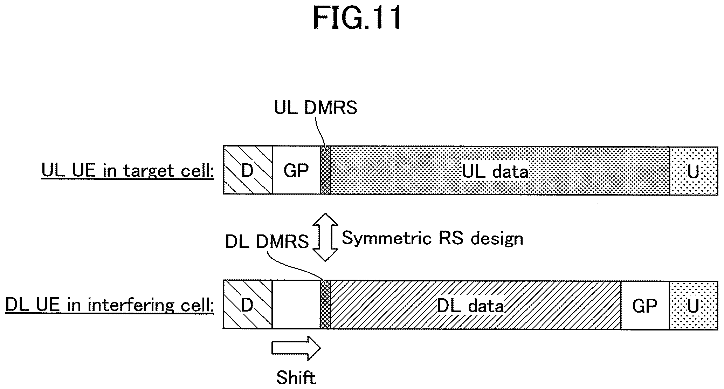

Fig. 11 illustrates arrangement example 2-1 of the DMRS. As illustrated in Fig. 11, in arrangement example 2-1, a UL DMRS in the target cell and a DL DMRS in the interfering cell are transmitted by the same time-frequency resource in the unit time frame. In addition, in arrangement example 2-1, DL data starts from the temporal position of a first DL DMRS in the unit time frame. That is, in this case, for example, the base station 202 in the interfering cell does not allocate resources to DL data in a section from the end of the DL control CH section to the start of the DL DMRS in the unit time frame and allocates resources to DL data from the start of the DL DMRS (or from the end of the DL DMRS when data is not capable of being mapped to the temporal position of the DL DMRS). According to this structure, the user equipment 102 in the interfering cell which receives the DL data can demodulate and decode the DL data from the beginning, using the DL DMRS, and can rapidly acquire the DL data. In addition, the user equipment 102 can return ACK/NACK using the UL control CH section in the same unit time frame. In this example, the position of the start time of data transmission is aligned with the position of the transmission time of the DMRS. However, the position of the end time of data transmission may be adjusted so as to be aligned with the position of the transmission time of the DMRS.

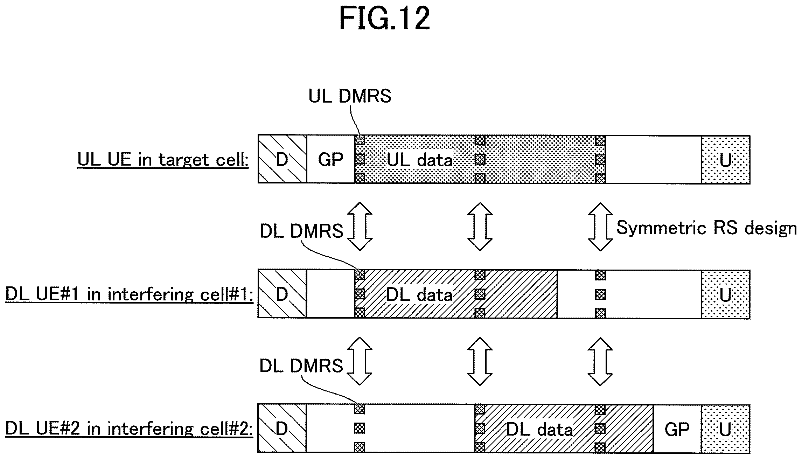

Fig. 12 illustrates arrangement example 2-2 of the DMRS. In arrangement example 2-2, there are two interfering cells (interfering cell #1 and interfering cell #2). In this example, a UL DMRS in a target cell, a DL DMRS in interfering cell #1, and a DL DMRS in interfering cell #2 are transmitted by the same time-frequency resource in the unit time frame. In addition, both DL data transmission in interfering cell #1 and DL data transmission in interfering cell #2 start from the transmission position of the DL DMRS.

In arrangement example 2-2, even when no resources are allocated to DL data in interfering cell #1 and interfering cell #2, the DMRSs are transmitted by the same time-frequency resource as those in other cells.

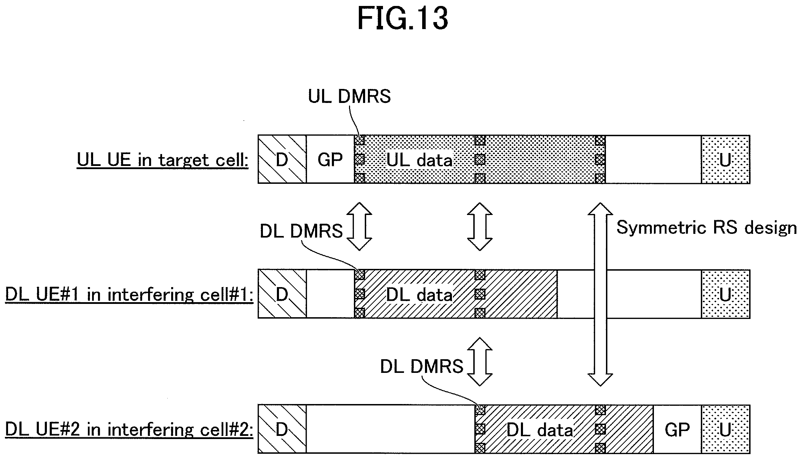

Fig. 13 illustrates arrangement example 2-3 of the DMRS. In arrangement example 2-3, when no resources are allocated to data in interfering cell #1 and interfering cell #2, no DMRSs are transmitted by the resources.

Figs. 12 and 13 illustrate whether the DMRS is transmitted on the basis of whether DL data is present. The same control process as described above may be applied to UL data. When UL data is present, the DMRS may be transmitted. When UL data is absent, the DMRS may not be transmitted.

### (Arrangement Example 3 of DMRS)

An example in which dynamic TDD is used in the target cell and the interfering cell has been described above. As described above, the technique according to the invention is not limited to dynamic TDD and can be applied to the whole field of flexible duplex. In arrangement example 3 (arrangement examples 3-1, 3-2, and 3-3) of the DMRS, as an example applied to a system other than dynamic TDD, an example in which dynamic TDD is applied in the target cell and flexible duplex of FDD is applied in DL transmission (for example, transmission by the base station 202 illustrated in Fig. 3) and UL transmission (for example, transmission by the user equipment 102 illustrated in Fig. 3) in the interfering cell will be described. Even when flexible duplex of FDD is applied, similarly to each of the above-mentioned arrangement examples, the DMRSs are transmitted by the same time-frequency resource in the target cell and the interfering cell and the DMRSs in the target cell and the interfering cell are orthogonalized.

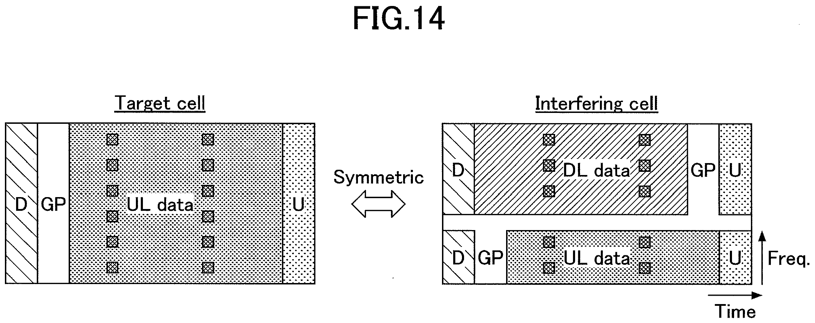

Fig. 14 illustrates arrangement example 3-1 of the DMRS. The arrangement example 3-1 is similar to the arrangement example 1-1 (Fig.10(a)), and the positions of the transmission start/end times of DL data are not adjusted.

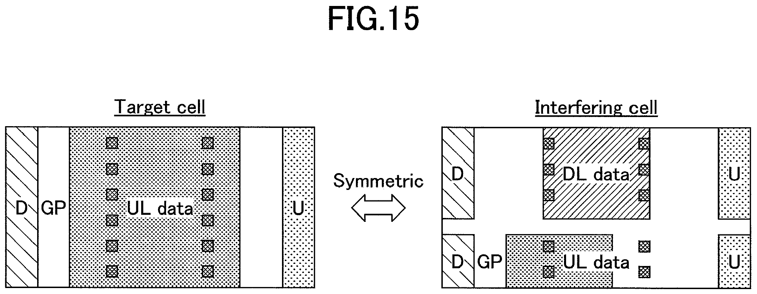

Fig. 15 illustrates arrangement example 3-2 of the DMRS. The arrangement example 3-2 is similar to the arrangement example 2-2(Fig. 12), and inn arrangement example 3-2, the positions of the transmission start/end times of DL data are adjusted and the DMRS is transmitted by a predetermined time-frequency resource even when data mapping is not performed.

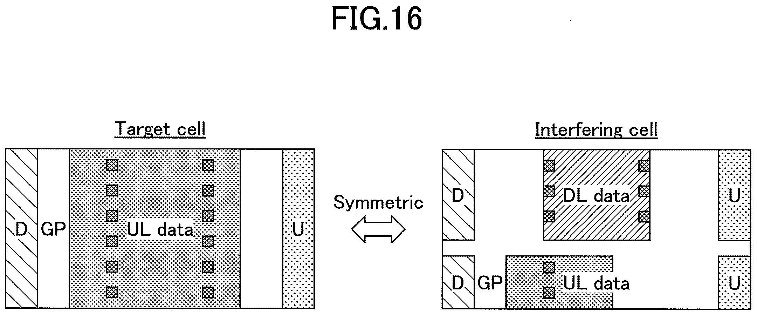

Fig. 16 illustrates arrangement example 3-3 of the DMRS. In arrangement example 3-3, the positions of the transmission start/end times of DL data are adjusted and the DMRS is transmitted by a predetermined time-frequency resource even when data mapping is not performed, as in arrangement example 2-3 (Fig. 13).

### (Arrangement Example 4 of DMRS)

In arrangement example 4 of the DMRS, the DMRS is transmitted by the control CH section as well as the data section.

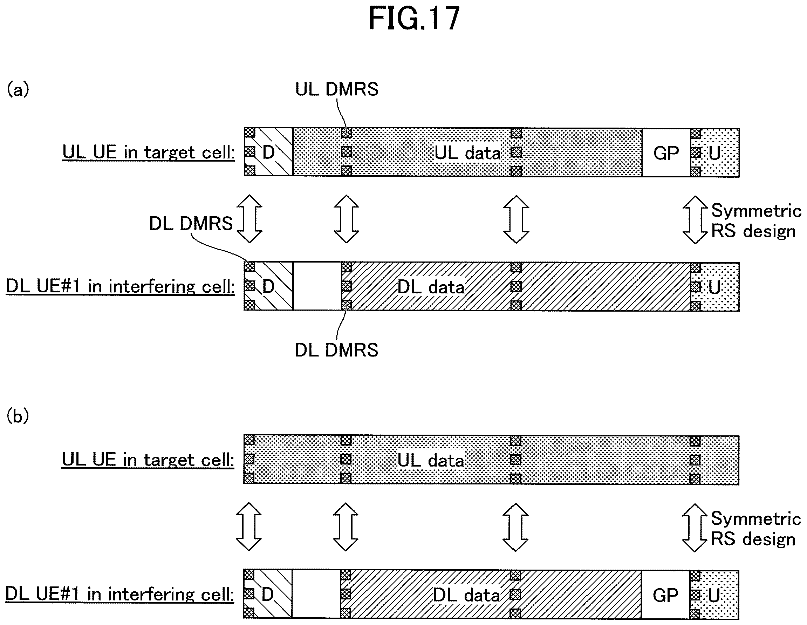

Fig. 17(a) illustrates arrangement example 4-1. The basic structure of arrangement example 4-1 is the same as that of arrangement example 1 illustrated in Fig. 10(a). As illustrated in Fig. 17(a), in arrangement example 4-1, the DMRSs are transmitted in each of the DL control CH section and the UL control CH section by the same time-frequency resource in the target cell and the interfering cell. In the example illustrated in Fig. 17, the DMRSs are transmitted in both the DL control CH section and the UL control CH section. However, the DMRS may be transmitted in the DL control CH section or the UL control CH section.

Fig. 17(b) illustrates arrangement example 4-2. In arrangement example 4-2, the unit time frame does not include the DL control CH section and the UL control CH section and only UL data is transmitted in the target cell. In the interfering cell, similarly to arrangement example 4-1, the DMRSs are transmitted in both the DL control CH section and the UL control CH section. In the target cell, the DMRSs are transmitted by the same time-frequency resource as the DMRSs in the interfering cell.

### (Configuration of DMRS in NR)

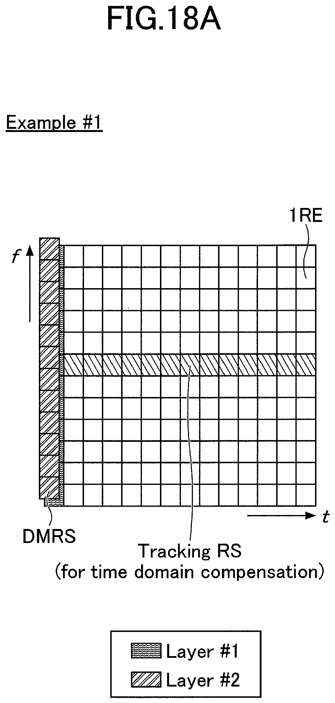

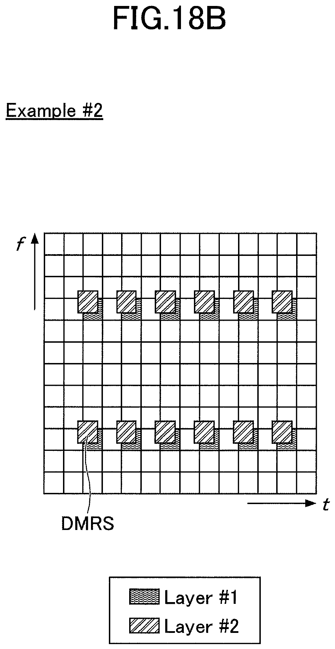

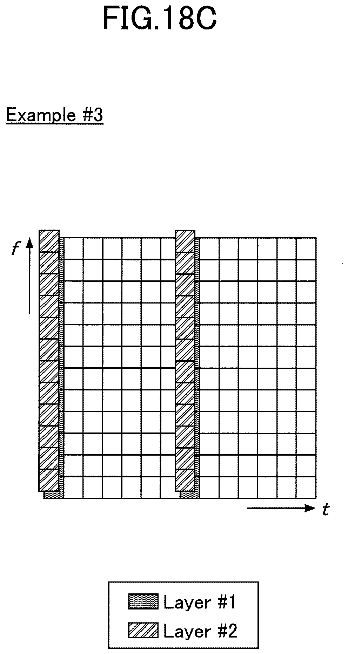

Figs. 18A-18C illustrate configuration example 1 (Fig. 18A), configuration example 2 (Fig. 18B), and configuration example 3 (Fig. 18C) of the DMRS assumed in NR. In configuration example 1 illustrated in Fig. 18A, DMRSs are arranged at the head of a unit time frame (for example, a subframe) and tracking RSs (for example, the width of one subcarrier) are arranged over the time length of the unit time frame. In configuration example 1, as described above, the DMRSs are orthogonalized between the cells and are arranged in the same time-frequency resources. In contrast, the tracking RSs may not be arranged in the same time-frequency resources between the cells and may not be orthogonalized. This is because the tracking RS is used to compensate for a time domain and is not used to estimate interference unlike the DMRS. However, the tracking RSs may be arranged in the same time-frequency resources between the cells, may be orthogonalized, and may be used to estimate interference, similarly to the DMRS.

In configuration example 2 illustrated in Fig. 18B, DMRSs are dispersed as illustrated in Fig. 18B. The DMRSs are orthogonalized between the cells and are arranged in the same time-frequency resource. In configuration example 3 illustrated in Fig. 18C, DMRSs are arranged at two temporal positions in a unit time frame (for example, a subframe), as illustrated in Fig. 18C. The DMRSs are orthogonalized between the cells and are arranged in the same time-frequency resource.

### (Method for Configuring DMRS)

For the arrangement of the DMRSs described in arrangement examples 1 to 4, for example, regulations for the time-frequency resources in which the DMRSs are arranged in the unit time frame are made in advance and each communication apparatus in each cell transmits the DMRSs according to the regulations. Therefore, it is possible to transmit the DMRSs with the same time-frequency resource in the cells (while the DMRSs are multiplexed). Regulations for generating DMRS sequences on the basis of the identification information (ID) of each communication apparatus such that the DMRS sequences transmitted from each communication apparatus are orthogonalized in order to orthogonalize the DMRSs may be made and each communication apparatus generates DMRSs according to the regulations.

The base station 200 may semi-statically or dynamically designate the positions of UL/DL DMRSs to the user equipment 100. The designated position is, for example, a time-frequency position. When a frequency position is determined in advance, only a temporal position may be designated. The designation of the position may be performed by an index indicating the temporal position, an index indicating the frequency position, or an index indicating the position of the time-frequency resource.

In addition, semi-static notification can be performed by, for example, broadcast information (for example, SIB) or RRC individual signaling.

Dynamic notification can be performed by, for example, the downlink control channel (for example, PDCCH) in the DL control CH section of each unit time frame. In addition, for the dynamic notification of the position of the UL/DL DMRSs, for example, the position of the DMRSs can be notified only when a data resource is allocated to the unit time frame. In addition, the position of the UL/DL DMRSs may be notified regardless of whether the data resource is allocated (independently of the allocation of the data resource).

For arrangement example 2 (when, for example, the start position of data is adjusted) illustrated in Figs. 11 to 13, the regulation that data starts from the position of the DMRS may be made in advance and the start position of data may be determined in the user equipment 100 and the base station 200 according to the regulation, without notifying the start position.

Instead of the above, the base station 200 may semi-statically or dynamically notify the user equipment 100 of the start position of UL/DL data. In the dynamic notification, in addition to data allocation information, the start position of UL/DL data may be explicitly inserted into the downlink control information or may be implicitly notified as the data allocation information.

### (For Generation of DMRS Sequence)

In this embodiment, as a UL/DL DMRS sequence generation method, any generation method may be used as long as the DMRSs are orthogonalized between the cells. In addition, different DMRS generation methods may be used in UL and DL as long as the DMRSs are orthogonalized between the cells.

In this embodiment, for example, a DMRS sequence generation method and a resource mapping method which are common to UL and DL are used in order to multiplex and orthogonalize the DMRSs between the cells.

For example, the user equipment 100 dynamically or semi-statically and explicitly or implicitly receives DMRS-related information from the base station 200. The DMRS-related information can be common to UL and DL. In addition, DMRS-related information for UL and DMRS-related information for DL may be separately notified, regardless of whether the DMRS sequence generation method and the resource mapping method are common to UL and DL.

The DMRS-related information includes, for example, parameters for generating the DMRS sequence and parameters for DMRS resource mapping.

An example of the parameters for generating the DMRS sequence is as follows.

Sequence information (for example, a PN sequence or a Zadoff-Chu sequence);
A seed for a PN sequence (for example, PCID, VCID, or UE-ID); (similarly to DL DMRS in LTE);
A group number for a Zadoff-Chu sequence/a base sequence number/a cyclic shift/a hopping pattern; (similarly to UL DMRS in LTE)
Information related to code spreading (OCC);
A transmission/system bandwidth; and
Frequency and time domain indexes (for example, a subframe/slot/mini-slot and RB indexes).

An example of the parameters for DMRS resource mapping is as follows.

DMRS port/transmission layer;
A mapping pattern (for example, a DMRS start position and a transmission cycle); and
DMRS density.

### (For Signaling Between Base Stations)

In order to perform the above-mentioned DMRS transmission for orthogonalizing DMRSs between the cells, DMRS-related information may be exchanged between adjacent cells (between the base stations in adjacent cells) by, for example, S1 signaling and/or X2 signaling. In addition, a DMRS sequence set which is used in the base station may be exchanged between the base stations in adjacent cells or a DMRS sequence set which is not preferably used by the base station may be exchanged between the base stations in adjacent cells.

For example, when adjacent cells are not synchronized with each other, information about time differences can be exchanged between the base stations in adjacent cells and each base station can transmit its own DMRS and notify the user equipment included in the base station of the temporal position of the DMRS, considering the time differences, such that the DMRSs are multiplexed between the cells. The information about time differences may be a portion of the DMRS-related information.

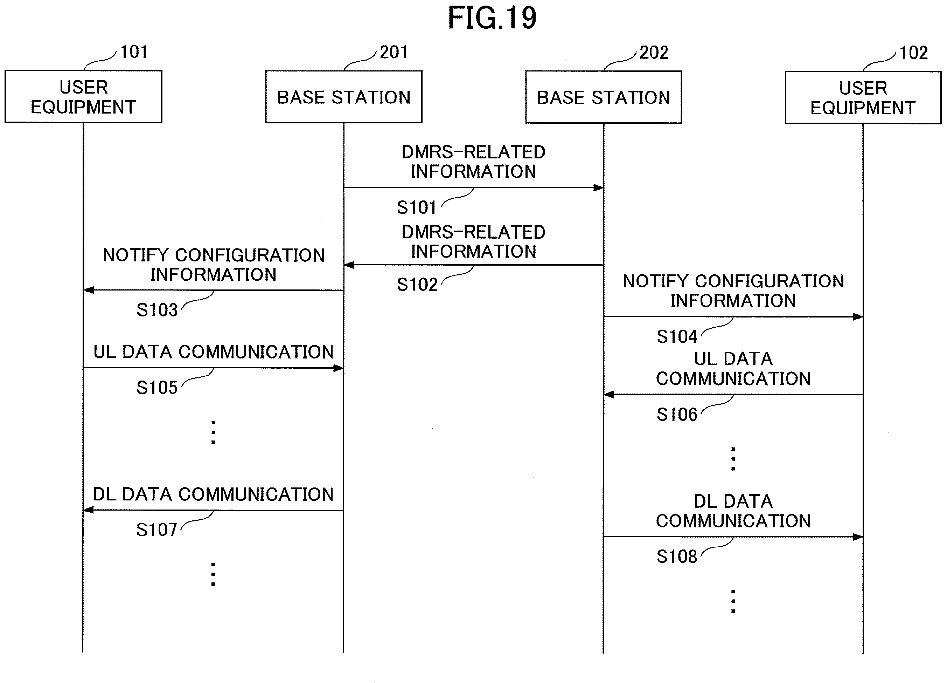

Fig. 19 is a diagram illustrating an example of a sequence when the above-mentioned information exchange is performed. In the example illustrated in Fig. 19, information is exchanged between the base station 201 and the base station 202.

As illustrated in Fig. 19, in Steps S101 and S102, the DMRS-related information is exchanged between the base station 201 and the base station 202. The base station 201 generates configuration information (for example, the transmission/reception positions of the DMRS) for the user equipment 101 on the basis of its own DMRS-related information and the DMRS-related information received from the base station 202 such that the DMRSs are orthogonalized in the same radio resource in the cells (here, the cell of the base station 201 and the cell of the base station 202) and are transmitted and received between the cells and transmits the configuration information to the user equipment 101 (Step S103). The base station 202 performs the same process as described above (Step S104). Then, the orthogonalized DMRSs are transmitted and received between the cells (Steps S105 to S108).

As described above, the DMRSs are orthogonalized in the same radio resource in the cells. According to this structure, the communication apparatus in each cell can receive the DMRS in the host cell, without being affected by interference with other cells. Therefore, the communication apparatus can appropriately perform an interference prevention process to acquire a desired signal. As a result, it is possible to improve throughput.

### (Structure of Devices)

An example of the functional structure of the user equipment 100 and the base station 200 that perform the operation according to the above-described embodiment will be described. Each of the user equipment 100 and the base station 200 has all of the functions (including arrangement examples 1 to 4) described in this embodiment. However, each of the user equipment 100 and the base station 200 may have a part (for example, the functions for achieving at least one of arrangement examples 1 to 4) of the functions described in this embodiment.

### <User Equipment 100>

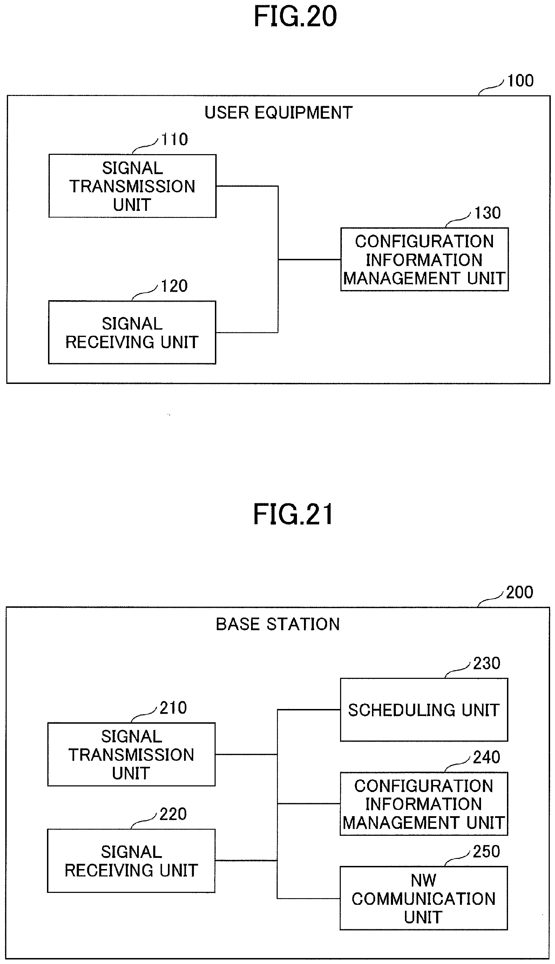

Fig. 20 is a diagram illustrating an example of the functional structure of the user equipment 100. As illustrated in Fig. 20, the user equipment 100 includes a signal transmission unit 110, a signal receiving unit 120, and a configuration information management unit 130. The functional structure illustrated in Fig. 20 is just an example. The functional units may be classified in any way or may have any names as long as they can perform the operation according to this embodiment.

The signal transmission unit 110 generates a signal in a lower layer from information in a higher layer and transmits the signal by radio. The signal receiving unit 120 receives various signals by radio and acquires information of the higher layer from the received signals. In addition, the signal receiving unit 120 may have an interference prevention function (for example, an MSE-IRC receiver).

The configuration information management unit 130 stores configuration information that is configured in advance and configuration information that is dynamically and/or semi-statically configured from, for example, the base station 200. For example, the signal transmission unit 110 generates a DMRS on the basis of the configuration information stored in the configuration information management unit 130 and transmits the DMRS. Then, the DMRS (an example of the reference signal) transmitted from the signal transmission unit 110 and the DMRS transmitted from a communication apparatus in an adjacent cell are orthogonalized in the same radio resource.

### <Base Station 100>

Fig. 21 is a diagram illustrating an example of the functional structure of the base station 200. As illustrated in Fig. 21, the base station 200 includes a signal transmission unit 210, a signal receiving unit 220, a scheduling unit 230, a configuration information management unit 240, and a NW communication unit 250.

The functional structure illustrated in Fig. 21 is just an example. The functional units may be classified in any way or may have any names as long as they can perform the operation according to this embodiment.

The signal transmission unit 210 generates a signal in a lower layer from information in a higher layer and transmits the signal by radio. The signal receiving unit 220 receives various signals by radio and acquires information of the higher layer from the received signals. In addition, the signal receiving unit 220 may have an interference prevention function (for example, an MSE-IRC receiver).

The scheduling unit 230 performs, for example, the allocation of resources to the user equipment 100. The configuration information management unit 240 stores configuration information that is configured in advance, determines configuration information to be dynamically and/or semi-statically configured in the user equipment 240, and retains the configuration information. In addition, the configuration information management unit 240 retains, for example, the DMRS-related information to be transmitted to other base stations through the NW communication unit 250 and retains the DMRS-related information received from other base stations through the NW communication unit 250. The configuration information management unit 240 sends configuration information to be dynamically and/or semi-statically configured in the user equipment 240 to the signal transmission unit 210 and directs the signal transmission unit 210 to transmit the configuration information.

For example, the signal transmission unit 210 generates a DMRS on the basis of the configuration information stored in the configuration information management unit 240 and transmits the DMRS. Then, the DMRS (an example of the reference signal) transmitted from the signal transmission unit 240 and the DMRS transmitted by a communication apparatus in an adjacent cell are orthogonalized in the same radio resource. The NW communication unit 250 is a functional unit that performs, for example, communication between the base stations.

### <Hardware Configuration>

The block diagrams (Figs. 20 and 21) used to describe the above-mentioned embodiment illustrate functional unit blocks. The functional blocks (components) are implemented by an arbitrary combination of hardware and/or software. In addition, a means for implementing each functional block is not particularly limited. That is, each functional block may be implemented by one device in which a plurality of elements are physically and/or logically coupled or by a plurality of devices that are physically and/or logically separated from each other and are connected directly and/or indirectly (for example, in a wired manner and/or by radio).

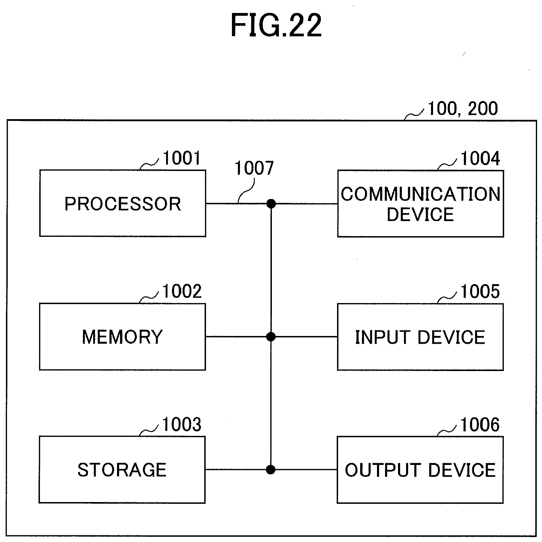

For example, each of the user equipment 100 and the base station 200 according to the embodiment of the invention may function as a computer that performs the processes according to this embodiment. Fig. 22 is a diagram illustrating an example of the hardware configuration of the user equipment 100 and the base station 200 according to this embodiment. Each of the user equipment 100 and the base station 200 may be physically configured as a computer device including, for example, a processor 1001, a memory 1002, a storage 1003, a communication device 1004, an input device 1005, an output device 1006, and a bus 1007.

In the following description, the term "device" can be substituted with, for example, a circuit, an apparatus, and a unit. The hardware configuration of UE and eNB may include one or a plurality of devices represented by reference numerals 1001 to 1006 in Fig. 22 or may not include some of the devices.

Each function of the user equipment 100 and the base station 200 may be implemented by the following process: predetermined software (program) is read onto hardware, such as the processor 1001 or the memory 1002, and the processor 1001 performs an operation to control the communication of the communication device 1004 and the reading and/or writing of data from and/or to the memory 1002 and the storage 1003.

The processor 1001 operates, for example, an operating system to control the overall operation of the computer. The processor 1001 may be a central processing unit (CPU) including, for example, an interface with peripheral devices, a control device, an arithmetic device, and a register.

The processor 1001 reads a program (program code), a software module, or data from the storage 1003 and/or the communication device 1004 to the memory 1002 and performs various types of processes according to the program, the software module, or the data. A program that causes a computer to perform at least some of the operations described in the embodiment is used as the program. For example, the signal transmission unit 110, the signal receiving unit 120, and the configuration information management unit 130 of the user equipment 100 illustrated in Fig. 20 may be implemented by a control program that is stored in the memory 1002 and is executed by the processor 1001. For example, the signal transmission unit 210, the signal receiving unit 220, the scheduling unit 230, the configuration information management unit 240, and the NW communication unit 250 of the base station 200 illustrated in Fig. 21 may be implemented by a control program that is stored in the memory 1002 and is executed by the processor 1001. In the embodiment, the above-mentioned various processes are performed by one processor 1001. However, the processes may be simultaneously or sequentially performed by two or more processors 1001. The processor 1001 may be mounted with one or more chips. The program may be transmitted from the network through an electric communication line.

The memory 1002 is a computer-readable recording medium and may include, for example, at least one of a read only memory (ROM), an erasable programmable ROM (EPROM), an electrically erasable programmable ROM (EEPROM), and a random access memory (RAM). The memory 1002 may also be referred to as, for example, a register, a cache, or a main memory (main storage device). The memory 1002 can store, for example, a program (program code) and a software module that can be executed to perform the processes according to the embodiment of the invention.

The storage 1003 is a computer-readable recording medium and may include, for example, at least one of an optical disk, such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may also be referred to as an auxiliary storage device. The above-mentioned storage medium may be, for example, a database, a server, and other proper media including the memory 1002 and/or the storage 1003.

The communication device 1004 is hardware (transmitting and receiving device) for communicating with the computer through a wired and/or radio network and is also referred to as, for example, a network device, a network controller, a network card, or a communication module. For example, the signal transmission unit 110 and the signal receiving unit 120 of the user equipment 100 may be implemented by the communication device 1004. The signal transmission unit 210 and the signal receiving unit 220 of the base station 200 may be implemented by the communication device 1004.

The input device 1005 is an input unit (for example, a keyboard, a mouse, a microphone, a switch, a button, or a sensor) that receives an input from the outside. The output device 1006 is an output unit (for example, a display, a speaker, or an LED lamp) that performs an output process to the outside. The input device 1005 and the output device 1006 may be integrated with each other (for example, a touch panel).

The devices, such as the processor 1001 and the memory 1002, are connected to each other by the bus 1007 for information communication. The bus 1007 may be a single bus or the devices may be connected to each other by different buses.

Each of the user equipment 100 and the base station 200 may include hardware, such as a microprocessor, a digital signal processor (DSP), an application specific integrated circuit (ASIC), a programmable logic device (PLD), and a field programmable gate array (FPGA), or some or all of the functional blocks may be implemented by the hardware. For example, the processor 1001 may be mounted with at least one of these hardware components.

### (Summary of Embodiment)

As described above, according to this embodiment, there is provided a radio communication system that forms a plurality of cells including a first cell and a second cell adjacent to the first cell. The radio communication system includes a first communication apparatus in the first cell and a second communication apparatus in the second cell. The first communication apparatus includes a first transmitting unit that transmits a reference signal and the second communication apparatus includes a second transmitting unit that transmits a reference signal. The reference signal transmitted by the first transmitting unit and the reference signal transmitted by the second transmitting unit are orthogonalized in the same radio resource.

According to the above-mentioned structure, in the radio communication system supporting a system that flexibly controls the resources used for downlink communication and uplink communication in each cell, a communication apparatus in a target cell can appropriately receive the reference signal of the target cell.

The first transmitting unit or the second transmitting unit may start transmitting data from a position of a transmission time of the reference signal. According to this structure, a communication apparatus that receives the reference signal can rapidly decode data.

In the radio communication system, for example, the first communication apparatus is a user equipment in the first cell and the second communication apparatus is a base station in the second cell. According to this configuration, it is possible to effectively prevent interference from a base station with high transmission power in, for example, an environment in which cells are arranged at high density.

The reference signal may be a demodulation reference signal. In the radio communication system, an uplink demodulation reference signal and a downlink demodulation reference signal may be generated by a common sequence generation method. According to this structure, it is possible to easily orthogonalize the uplink and downlink reference signals between the cells.

### (Supplementary Explanation of Embodiment)

The embodiment of the invention has been described above. However, the disclosed invention is not limited to the embodiment and it will be understood by those skilled in the art that various variations, modifications, alterations, and substitutions can be made. Specific numerical examples are used to facilitate the understanding of the invention. However, the numerical values are just examples and any appropriate values may be used, unless otherwise stated. The classification of the items in the above-mentioned description is not essential in the invention and matters described in two or more items may be combined and used, if necessary. Matters described in an item may be applied to matters described in another item (as long as they do not contradict each other). The boundaries between the functional units or the processing units in the functional block diagram do not necessarily correspond to the boundaries between physical components. The operation of a plurality of functional units may be physically performed by one component. Alternatively, the operation of one functional unit may be physically performed by a plurality of components. In the procedures described in the embodiment, the order of the processes may be changed as long as there is no contradiction between the processes. For convenience of explanation of the processes, the user equipment 100 and the base station 200 have been described with reference to the functional block diagrams. However, the devices may be implemented by hardware, software, or a combination thereof. The software that is operated by the processor included in the user equipment 100 according to the embodiment of the invention and the software that is operated by the processor included in the base station 200 according to the embodiment of the invention may be stored in a random access memory (RAM), a flash memory, a read only memory (ROM), an EPROM, an EEPROM, a register, a hard disk (HDD), a removable disk, a CD-ROM, a database, a server, and other proper storage media.

The notification of information is not limited to the aspects/embodiments described in the specification and may be performed by other methods. For example, the notification of information may be performed by physical layer signaling (for example, downlink control information (DCI) and uplink control information (UCI)), higher layer signaling (for example, radio resource control (RRC) signaling, medium access control (MAC) signaling, and broadcast information (a master information block (MIB) and a system information block (SIB))), other signals, or combinations thereof. The RRC signaling may also be referred to as an RRC message and may be, for example, an RRC connection setup message or an RRC connection reconfiguration message.

Each aspect/embodiment described in the specification may be applied to systems using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), and other proper systems and/or next-generation systems that are extended on the basis of these systems.

In each aspect/embodiment described in the specification, for example, the order of the processes in the procedure, the sequence, and the flowchart may be changed as long as there is no contraction between the processes. For example, for the method described in the specification, elements of various steps are presented in the exemplified order. However, the invention is not limited to the presented specific order.

In the specification, in some cases, a specific operation performed by the base station 200 is performed by an upper node of the base station. In a network having one or a plurality of network nodes including the base station 200, it is apparent that various operations performed for communication with the user equipment 100 can be performed by the base station 200 and/or a network node (for example, MME or S-GW is considered and the network node is not limited thereto) other than the base station 200. In the above-described embodiments, one network node is provided other than the base station 200. However, a plurality of other network nodes (for example, MME and S-GW) may be combined with each other.

The aspects/embodiments described in the specification may be independently used, may be combined with each other, or may be changed in association with execution.

In some cases, the user equipment 100 is referred to as a subscriber station, a mobile unit, a subscriber unit, a radio unit, a remote unit, a mobile device, a radio device, a radio communication apparatus, a remote device, a mobile subscriber station, an access terminal, a mobile terminal, a radio terminal, a remote terminal, a handset, a user agent, a mobile client, a client, or some other proper terms according to operators.

In some cases, the base station 200 is referred to as NodeB (NB), enhanced NodeB (eNB), a base station, or some other proper terms according to operators.

In some cases, the terms "determining" and "determining" used in the specification include various operations. The terms "determining" and "deciding" can include, for example, "determination" and "decision" for judging, calculating, computing, processing, deriving, investigating, looking-up (for example, looking-up in a table, a database, or other data structures), and ascertaining operations. In addition, the terms "determining" and "deciding" can include "determination" and "decision" for receiving (for example, information reception), transmitting (for example, information transmission), input, output, and accessing (for example, accessing data in a memory) operations. The terms "determining" and "deciding" can include "determination" and "decision" for resolving, selecting, choosing, establishing, and comparing operations. That is, the terms "determining" and "deciding" can include "determination" and "decision" for any operation.

The term "on the basis of" used in the specification does not mean "on the basis of only" unless otherwise stated. In other words, the term "on the basis of" means both "on the basis of only" and "on the basis of at least".

The terms "include" and "including" and the modifications thereof are intended to be inclusive, similarly to the term "comprising", as long as they are used in the specification or the claims. In addition, the term "or" used in the specification or the claims does not mean exclusive OR.

In the entire disclosure, for example, when an article, such as "a", "an", or "the", in English is added by translation, the article can include the meaning of the plural as long as it does not clearly indicate the single number in context.

The invention has been described in detail above. It will be apparent to those skilled in the art that the invention is not limited to the embodiments described in the specification. Various modifications and changes of the invention can be made, without departing from the scope and spirit of the invention described in the claims. Therefore, the embodiments described in the specification are illustrative and do not limit the invention.

This application claims the benefit of Japanese Priority Patent Application JP 2016-221062 filed November 11, 2016, and the entire contents of the Patent Application JP 2016-221062 are incorporated herein by reference.

### EXPLANATIONS OF LETTERS OR NUMERALS

- 100: USER EQUIPMENT
- 110: SIGNAL TRANSMISSION UNIT
- 120: SIGNAL RECEIVING UNIT
- 130: CONFIGURATION INFORMATION MANAGEMENT UNIT
- 200: BASE STATION
- 210: SIGNAL TRANSMISSION UNIT
- 220: SIGNAL RECEIVING UNIT
- 230: SCHEDULING UNIT
- 240: CONFIGURATION INFORMATION MANAGEMENT UNIT
- 250: NW COMMUNICATION UNIT
- 1001: PROCESSOR
- 1002: MEMORY
- 1003: STORAGE
- 1004: COMMUNICATION DEVICE
- 1005: INPUT DEVICE
- 1006: OUTPUT DEVICE

## Claims

1. A radio communication system that forms a plurality of cells including a first cell and a second cell adjacent to the first cell, comprising:
a first communication apparatus in the first cell; and
a second communication apparatus in the second cell,
wherein the first communication apparatus includes a first transmitting unit that transmits a reference signal and the second communication apparatus includes a second transmitting unit that transmits a reference signal, and
the reference signal transmitted by the first transmitting unit and the reference signal transmitted by the second transmitting unit are orthogonalized in the same radio resource.

2. The radio communication system according to claim 1,
wherein the first transmitting unit or the second transmitting unit starts transmitting data from a position of a transmission time of the reference signal.

3. The radio communication system according to claim 1 or 2,
wherein the first communication apparatus is a user equipment in the first cell and the second communication apparatus is a base station in the second cell.

4. The radio communication system according to any one of claims 1 to 3,
wherein the reference signal is a demodulation reference signal, and
in the radio communication system, an uplink demodulation reference signal and a downlink demodulation reference signal are generated by a common sequence generation method.

5. A reference signal transmission method that is performed in a radio communication system which forms a plurality of cells including a first cell and a second cell adjacent to the first cell, comprising:
a step in which a first communication apparatus in the first cell transmits a reference signal; and
a step in which a second communication apparatus in the second cell transmits a reference signal,
wherein the reference signal transmitted by the first transmitting apparatus and the reference signal transmitted by the second transmitting apparatus are orthogonalized in the same radio resource.
